# EUROPEAN PATENT SPECIFICATION

(11) **EP 2 471 684 B1**
(45) Date of publication and mention of the grant of the patent: **12.03.2014**
(21) Application number: 10197130.7
(22) Date of filing: 28.12.2010
(51) Int. Cl.: B60N 2/16, B60N 2/30, B60N 2/24, B60N 2/01

(54) **Sliding seat system for passenger transport vehicle, and passenger transport vehicle equipped with at least one such system**
Gleitsitzsystem für Passagiertransportfahrzeuge und Passagiertransportfahrzeug mit mindestens einem derartigen System
Système de siège coulissant pour véhicule de transport de passagers et véhicule de transport de passagers équipé d'au moins un tel système

(43) Date of publication of application: 04.07.2012
(73) Proprietor: Iveco France S.A., 69200 Vénissieux (FR)
(72) Inventor: Rey, Philippe, 69320 Feyzin (FR)
(74) Representative: Borsano, Corrado

(56) References cited:
- EP-A1- 1 106 422
- EP-A1- 1 864 850
- FR-A1- 2 842 769
- US-A- 1 643 236

## Description

The present invention concerns a sliding seat system for a passenger transport vehicle, as well as a passenger transport vehicle equipped with at least one such sliding seat system.

The field of the invention is that of configurable seats adapted to modify the number of seats in a passenger transport vehicle, in particular of the bus, trolley, tram or subway type. Such a vehicle moves on a path including at least one station stop, during which people may get on or off. The vehicle can be steered by a driver and/or guided automatically by electrical wires, rails, or even optical means.

Traditionally, the vehicle comprises a body shell equipped, near its lateral edges, with different seats intended for the passengers. These seats can be single, i.e. making it possible to receive a single user, or multiple, i.e. allowing several users to sit next to each other.

It is also known to equip the vehicle with foldable seats, for example of the jump seat type. Such a foldable seat can alternate simply and quickly between a folded position and an unfolded position, so as to respond to the different degrees of crowds of passengers. Moreover, the foldable seat enables easy maintenance of the transport vehicle, e.g. for cleaning.

FR-A-2 902 052 describes a foldable seat for a passenger transport vehicle, comprising a base resting on the floor of the body shell of said vehicle, as well as a main seat cushion and a main seatback capable of receiving a first passenger. The base of the seat does not protrude laterally beyond the main seat cushion. The seat also comprises a secondary seat cushion and a secondary seatback that are laterally movable between a folded position, in which they are retracted relative to the main seat cushion and the main seatback, and an unfolded position, in which they are arranged next to the main seat cushion and the main seatback so as to receive a second passenger. In that folded position, the main seat cushion and the secondary seat cushion are not aligned in height, such that there is an open intermediate space between them. The foldable seat therefore presents a minor risk of jamming certain parts of passengers' bodies or clothing, in particular for children, when the secondary seat cushion is folded and retracted in the main seat cushion.

D1 shows a sliding seat system with the features of the preamble of claim 1.

The aim of the present invention is to propose a practical, safe and ergonomic seat system, intended in particular to equip a passenger transport vehicle.

To that end, the invention relates to a sliding seat system for a passenger transport vehicle, comprising the features of claim 1.

Therefore, the invention makes it possible to facilitate manipulation of the sliding seat system by a user, in particular a passenger, while improving the usage safety. The height adjustment of the mobile seat relative to the fixed seat, with the alignment of their respective seat cushions, can be done simply and quickly. The fixed and mobile seats, which are preferably made in a single piece and have a similar design, form a compact assembly when the system is in the folded position. Moreover, the base does not protrude laterally beyond the fixed seat, whether the mobile seat is in the folded position or the unfolded position, such that the cleaning of the floor of the vehicle under the seat system is facilitated.

According to other advantageous features of the invention, considered alone or in combination:
- The actuating device is configured to move the mobile seat following a lateral translational movement along a first axis and following a circular translational movement perpendicular to said first axis.
- The mobile seat is a single piece and its height can be adjusted relative to the fixed seat in the unfolded position, without undergoing any deformation.
- The means for aligning the height of the mobile seat comprise a jack provided with a body hinged relative to the support plate and a rod mobile relative to the body so as to exert a stress on the mobile seat, this stress being able, when the mobile seat is offset laterally relative to the fixed seat, to make the levers pivot and move the mobile seat following a circular translational movement perpendicular to the first axis.
- The actuating device comprises sliding means for making the mobile seat slide relative to the fixed seat, said sliding means comprising at least one slide mechanism arranged between the mobile seat and the fixed seat, and the mobile seat is able to slide between the folded position and the unfolded position without undergoing any deformation, while the base does not protrude laterally beyond the fixed seat.
- The actuating device also comprises locking means for locking the mobile seat in the unfolded position, said locking means being able to exert a stress opposite the lowering of the mobile seat relative to the fixed seat on the mobile seat.

The invention also relates to a passenger transport vehicle, equipped with at least one sliding seat system as mentioned above.

The invention will be better understood upon reading the following description, given only as a non-limiting example and done in reference to the drawings, in which:
- Figure 1 is a top view of a passenger transport vehicle of the bus type according to the invention, equipped with several sliding seat systems also according to the invention and shown in the folded position;
- Figure 2 is a top view similar to figure 1, where the sliding seat systems are shown in the unfolded position;
- Figure 3 is a partial perspective view of the vehicle of figures 1 and 2, showing the seat systems in the unfolded position, the vehicle also comprising a partially illustrated body shell;
- Figure 4 is a larger-scale perspective view of one of the seat systems of figure 3 shown in the folded position, this seat system being equipped with a column for connecting to the body shell of the vehicle, this column only being partially illustrated;
- Figure 5 is a perspective view similar to figure 4, showing the seat system and the column in the unfolded position;
- Figure 6 is a bottom view, following arrow VI in figure 5, of the seat system in the unfolded position;
- Figure 7 is a front view, following arrow VII in figure 6, of the seat system and the column in the folded position;
- Figure 8 is a view similar to figure 7, showing the seat system and the column in the unfolded position,
- Figure 9 is a cross-section along line IX-IX of figure 7, showing the seat system, the actuating device and part of the column in the folded position;
- Figure 10 is a side view following arrow X in figure 8, showing the seat system, the actuating device, and the column for connecting to the body shell of the vehicle in the unfolded position;
- Figure 11 is a larger-scale view of detail XI in figure 6;
- Figure 12 is a larger-scale view of detail XII in figure 8;
- Figure 13 is a larger-scale view of detail XIII in figure 9;
- Figure 14 is a larger-scale view of detail XIV in figure 10;
- Figure 15 is a partial perspective view of a second embodiment of a sliding seat system according to the invention, equipped with a column and an actuating device, this system being shown in the unfolded position;
- Figure 16 is a larger-scale view of detail XVI in figure 15;
- Figure 17 is a view following arrow XVII in figure 16;
- Figures 18 and 19 are views similar to figures 13 and 14, respectively, showing the system according to the second embodiment; and
- Figures 20 and 21 are views similar to figures 11 and 12, respectively, showing the system according to the second embodiment.

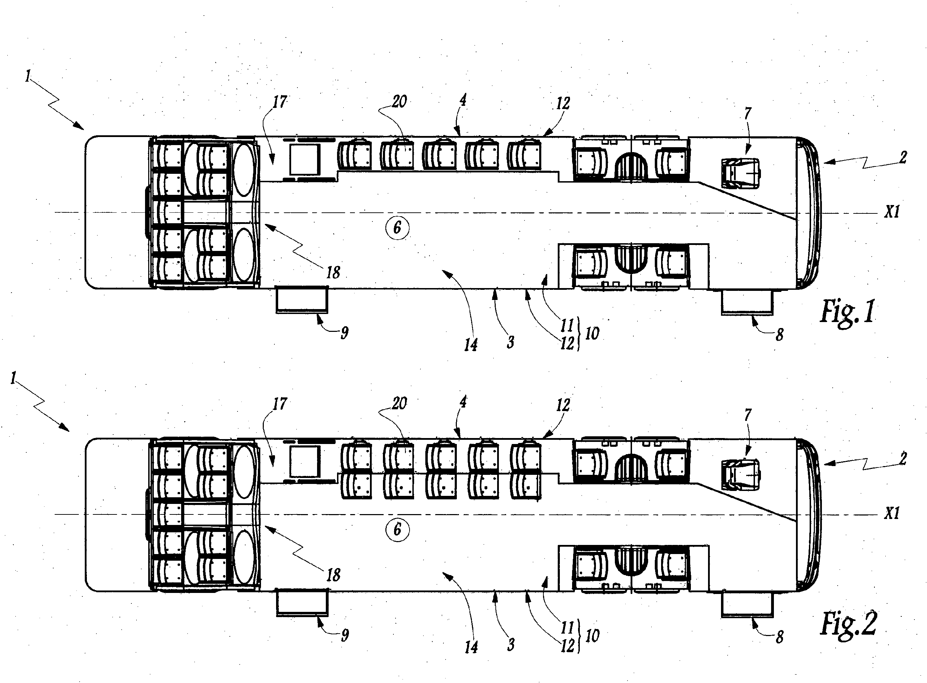

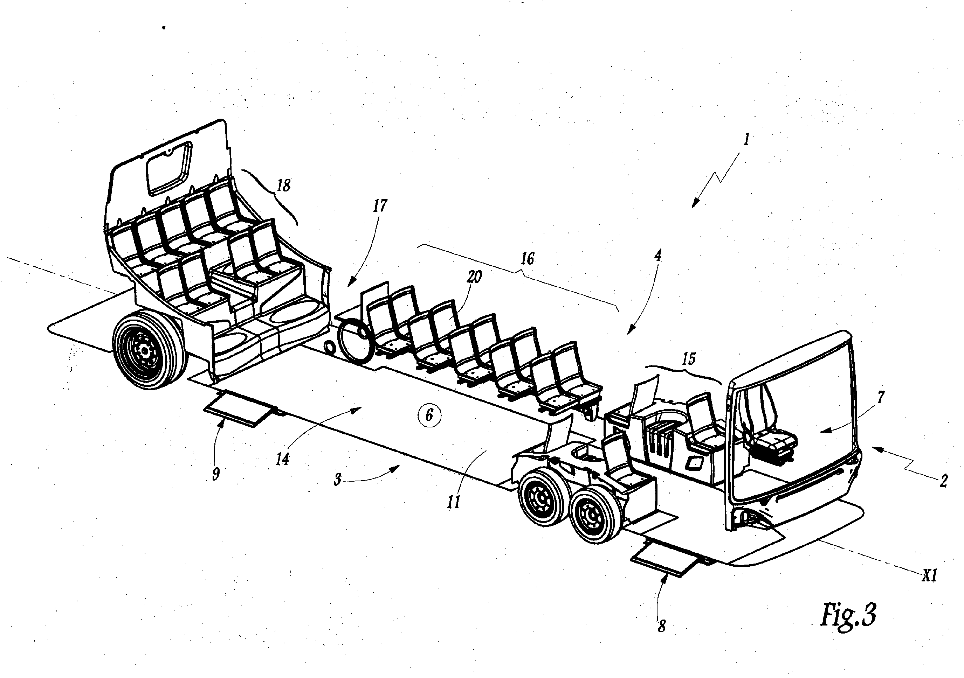

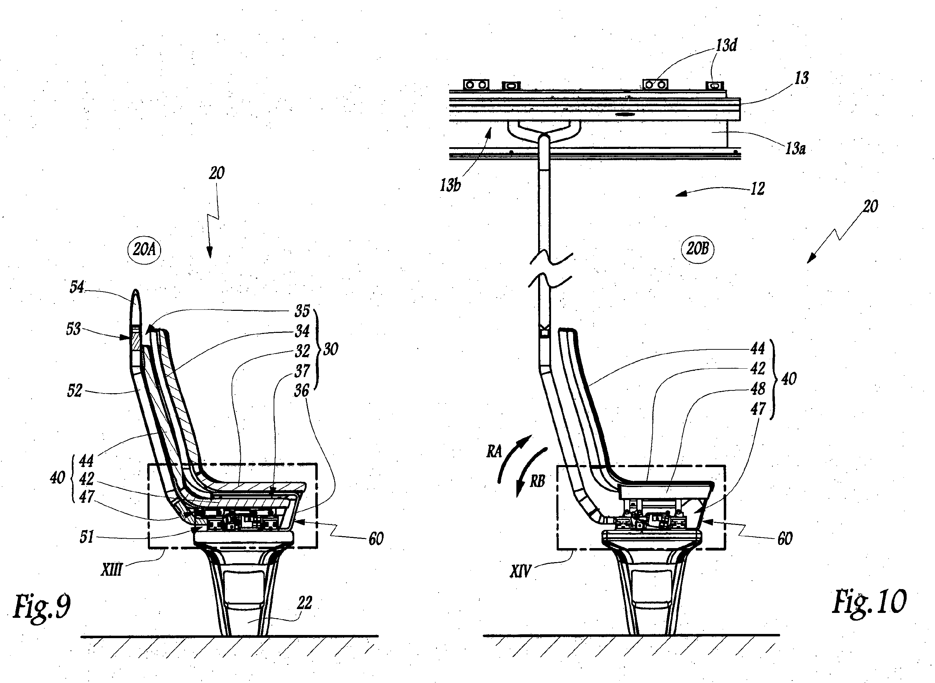

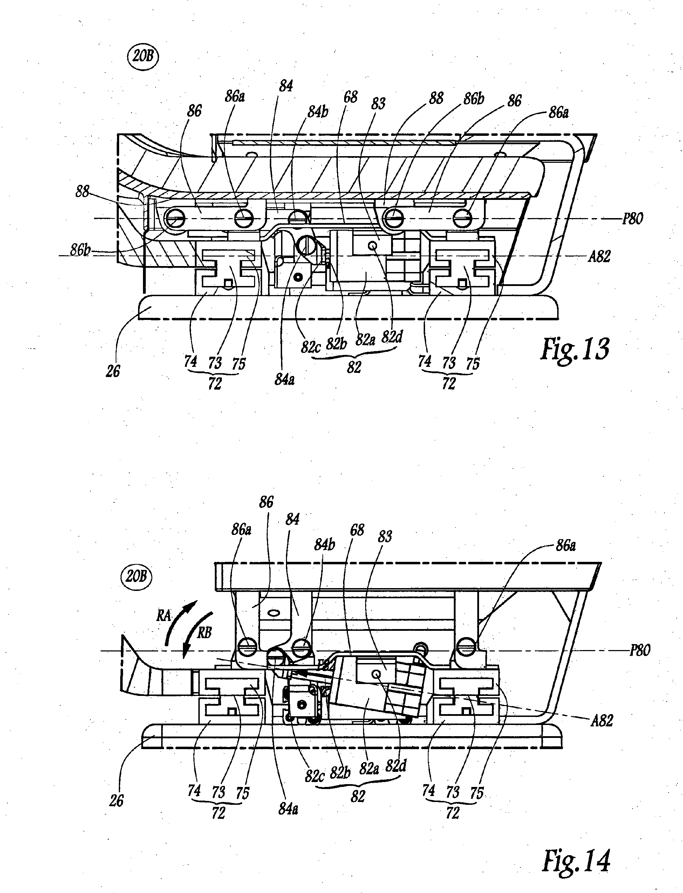

Figures 1 to 14 illustrate a sliding seat system 20 according to the invention. This system 20 equips a passenger transport vehicle 1 according to the invention, of the bus type, shown in particular in figures 1 to 3.

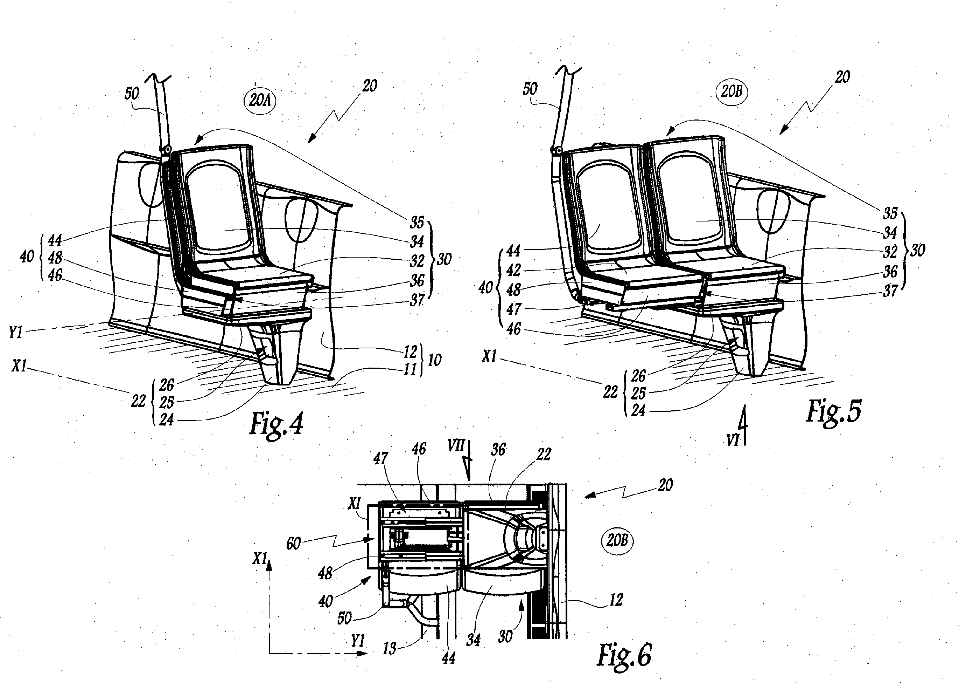

The vehicle 1 is elongated along a longitudinal axis X1, with a front face 2, a right side 3 and a left side 4. The vehicle 1 includes wheels mounted on axles, a chassis and a body shell 10. In particular, said body shell 10 comprises a floor 11, walls 12, and a ceiling 13, thereby defining an inner space 6 of the vehicle 1. For simplification purposes, the ceiling 13 is shown only in figures 6 to 8 and 10, while the walls 12 are shown only in figures 1, 2, 4 to 6 and 10.

At the wall 12 situated on the right side 3, the body shell 10 is provided with passenger entry and exit systems 8 and 9. In particular, these systems include a front door 8 arranged towards the front 2 of the vehicle 1, near a driver location 7, as well as a back door 9 opening on a platform 14 situated substantially at the center of the vehicle along the axis X1. As a non-limiting example, each door 8 and 9 can be provided with two sliding or pivoting leaves.

The inside 6 of the vehicle 1 is also equipped with fixed seats 15 situated towards the front 2, configurable seats 16 situated on the left side 4 at the platform 14, as well as fixed seats 18 arranged in tiers at the back of the vehicle. More precisely, the seats 18 are situated behind the door 8b, the seats 16 and the platform 14 following the axis X1, opposite the front face 2 and the driver location 7. The platform 14 is adapted to receive a significant number of standing passengers, strollers, wheelchairs and/or bulky bags. Moreover, a space 17 is formed between the seats 16 and 18 and constitutes an extension of the platform 14 provided in particular to receive a wheelchair or bags.

In the context of the invention, the configurable seats 16 comprise several sliding seat systems 20, which are fastened to the body shell 10 and aligned behind each other in a longitudinal direction parallel to the axis X1. In figures 1 to 3, the systems 20 face forward and are arranged only on the left side 4 of the body shell 10. Each system 20 can be actuated independently from the rest of the configurable seats 16.

In an alternative that is not illustrated, the inside 6 of the vehicle can be arranged differently. For example, the systems 20 can be arranged on either side of the axis X1, at the platform 14, while being fastened on the right 3 and left 4 sides of the body shell 10. In that case, the space available on the platform 14 is reduced, but the number of potentially available seated places is higher. According to another example, the seats 15 and 18 can be arranged differently and/or comprise configurable seats 16.

As shown in figures 4 to 6, the sliding seat system 20 comprises a base 22 that includes a foot 24, an accessory 25 and a plate 26. The base 22 is made up of a shell made from a composite material, more or less assuming the shape of a triangle whereof the base is pressed against the wall 12. The foot 24 of the base 22 is rigidly fastened to the floor 11 of the vehicle 1 and the wall 12 of the body shell 10, on the left side 4. The accessory 25 is housed in the foot 24 and can consist of any type of equipment suited to the present application, e.g. a loudspeaker, a conditioned air outlet or an air freshener diffuser. The plate 26 rests horizontally on the foot 24, i.e. parallel to the floor 11.

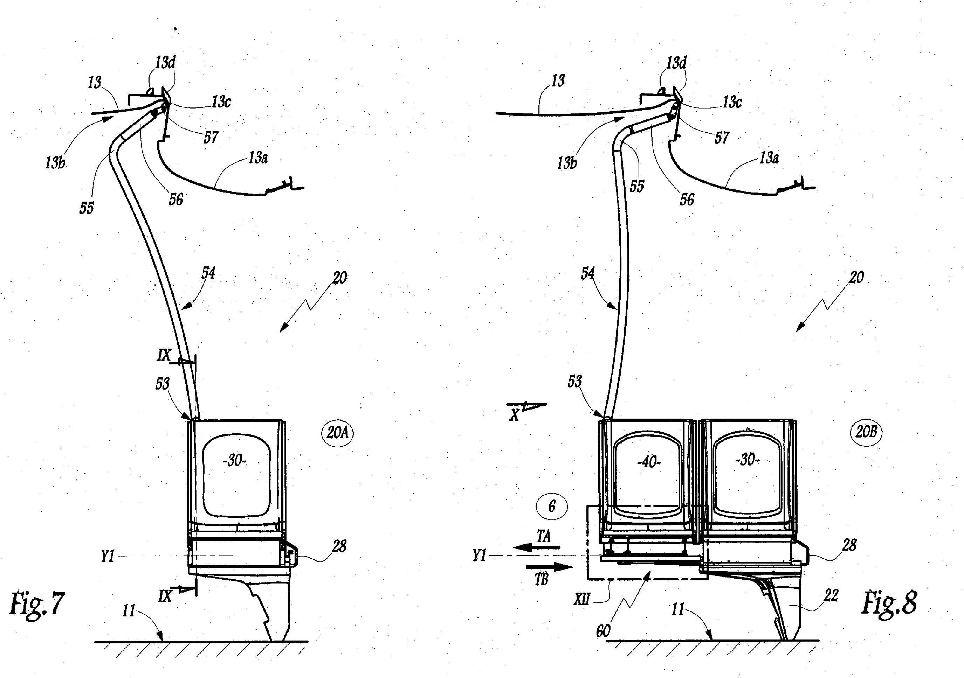

Moreover, a fastening member 28 visible in figures 7 and 8 makes it possible to secure the system 20 to the body shell 10, in particular by snapping and/or screwing.

As shown in figures 4 to 10, the sliding seat system 20 also comprises two seats 30 and 40. The first seat 30 is fixed and integral with the plate 26 of the base 22, while the second seat 40 can slide relative to the seat 30 and the base 22 in a translational movement TA with an axis Y1 perpendicular to the axis X1. This translation TA is horizontal relative to the floor 11 and lateral relative to the fixed seat 30, on the platform 14 side. In other words, the seat 40 can move between two positions, i.e. a folded position 20A in which the seat 40 is retracted relative to the seat 30 and therefore cannot receive a passenger, and an unfolded position 20B in which the seat 40 is arranged next to the seat 30 so as to be able to receive a passenger.

The fixed seat 30 comprises a seat cushion 32, a seatback 34, and a front cover plate 36, defining a rear space 35 and a lower space 37. On the seat 30 side provided to receive a passenger who wishes to sit, the seatback 34 is inclined relative to the seat cushion 32, preferably by an obtuse angle between 90° and 110°. The cover plate 36 is attached, on one hand, to the plate 26 of the base 22 and, on the other hand, to an edge of the seat cushion 32 opposite the edge of the seat cushion 32 where the seatback 34 is attached. The lower space 37 is defined in the seat 30 between the plate 26, the seat cushion 32 and the cover plate 36. The base 22 does not protrude laterally beyond the seat cushion 32 of the fixed seat 30.

The mobile seat 40 comprises a seat cushion 42, a seatback 44, a front cover plate 46 and a side cover plate 48, defining a lower space 47. Preferably, the incline of the seatback 44 relative to the seat cushion 42 is similar to the incline of the seatback 34 relative to the seat cushion 32. The front cover plate 46 of the seat 40 is parallel to the front cover plate 36 of the seat 30, while the side cover plate 48 faces the inside 6 of the vehicle 1. The seatback 44 and the cover plates 46 and 48 are fastened to three edges of the seat cushion 42, leaving a fourth edge free that is oriented towards the wall 12, opposite the cover plate 48. The lower space 47 is defined in the seat 40 between the seat cushion 42, the cover plate 46 and the cover plate 48.

As shown in figures 5 and 8, the assembly formed by the seat cushion 32 and the seatback 34 is identical to the assembly formed by the seat cushion 42 and the seatback 44. Indeed, the seat 30 and the seat 40 are manufactured, at least in part, using the same method. Preferably, the seat cushion 32 and the seatback 34 of the seat 30 are a single piece and molded in a rigid plastic material, and the same is true for the seat cushion 42 and the seatback 44 of the seat 40. For example, the material used to manufacture the seats 30 and 40 can be wood, steel, a metal alloy, a thermoplastic or thermosetting polymer, or an assembly of some of the above.

Thus, the single-piece mobile seat 40 can be moved between the folded position 20A and the unfolded position 20B without undergoing any deformation, in particular during sliding and/or height adjustment thereof, as explained below.

Hereinafter, the main seat cushion 32 and the main seatback 34 of the fixed seat 30, which are always available for a passenger, are distinguished from the secondary seat cushion 42 and the secondary seatback 42 of the mobile seat 40, which are available for a passenger only when the system 20 is in the unfolded position 20B. Indeed, in the folded position 20A, the seat 40 is retracted behind the seat 30, in the spaces 35 and 37.

In an alternative that is not shown, the mobile seat 40 can be retracted inside the fixed seat 30. In that case, the seat cushion 32 and the seatback 34 are hollow and define an L-shaped housing adapted to receive the seat cushion 42 and the seatback 44.

The seat system 20 is also equipped with a connecting column 50 for connecting the system 20 to the body shell 10 of the vehicle 1. More specifically, the lower portion of the column 50 is connected to the seat 40, while the upper portion of the column 50 is connected to the ceiling 13. To that end, the ceiling 13 comprises a body shell 13a, a cavity 13b, anchoring members 13c for anchoring the column 50, and fastening members 13d for fastening the ceiling 13 to the structure of the vehicle 1. The column 50 extends in a globally vertical direction and includes a lower anchoring end 51, a lower bar 52, a hinge 53, an upper bar 54, a bend 55 inclined towards the wall 12 and the ceiling 13, a fork 56 with two arms, and a hinge 57 situated at the upper end of each arm of the fork 56. The anchor 51 is rigidly attached to the seat 40 at the space 47, while the hinges 57 cooperate with the anchoring members 13c. Alternatively, the anchor 51 can be fastened on another portion of the seat 40.

Passengers standing on the platform 14 can hold on to the column 50, in particular at the bar 54.

When the seat 40 is moved between the folded position 20A and the unfolded position 20B, the column 50 pivots at its hinges 53 and 57, following a movement globally situated in a plane perpendicular to the axis X1 and parallel to the axis Y1.

According to one particular alternative, the column 50 can be configured to actuate the sliding seat system 20, for example by pulling on the bar 54 near the hinge 53. In other words, the system 20 is then configured so that a pull exerted on the column 50 moves the seat 40 in translation TA. Preferably, this pull must have an intensity above a threshold value below which the system 20 is not actuated. Moreover, the system 20 can optionally be configured so that a thrust exerted on the column 50 retracts the seat 40 relative to the seat 30.

Preferably, the system 20 can be locked using electronic and/or mechanical locking means (not shown), which can be actuated only by the driver of the vehicle 1, a transportation agent or a maintenance operator. In other words, the system 20 can be selectively locked in the folded position 20A, or locked in the unfolded position 20B. For example, the locking of the system 20 can be controlled from an instrument panel situated in the driver location 7 of the vehicle 1. According to another example, the locking of the system 20 can be controlled using a key, said key corresponding to a lock integrated in the system 20. The locking and/or actuating means of the system 20 are not accessible to the passengers. Thus, the mobile seat 40 can be moved by the driver or another authorized person, automatically or via the column 50, only when the system 20 has been unlocked. In particular, the configuration change of the various sliding seat systems 20 equipping the vehicle 1 can be done in the absence of passengers, for example at the terminus of the vehicle 1, at the beginning or end of service, or during the day depending on peak passenger crowds.

Alternatively, the locking and/or actuating means of the system 20 can be accessible to the passengers.

Hereinafter, a person actuating the system 20 is designated as "the operator."

The seat system 20 comprises an actuating device 60, making it possible to move the mobile seat 40 from the folded position 20A towards the unfolded position 20B and, conversely, from the unfolded position 20B towards the folded position 20A. The device 60 also makes it possible to keep the seat 40 in the unfolded position 20B.

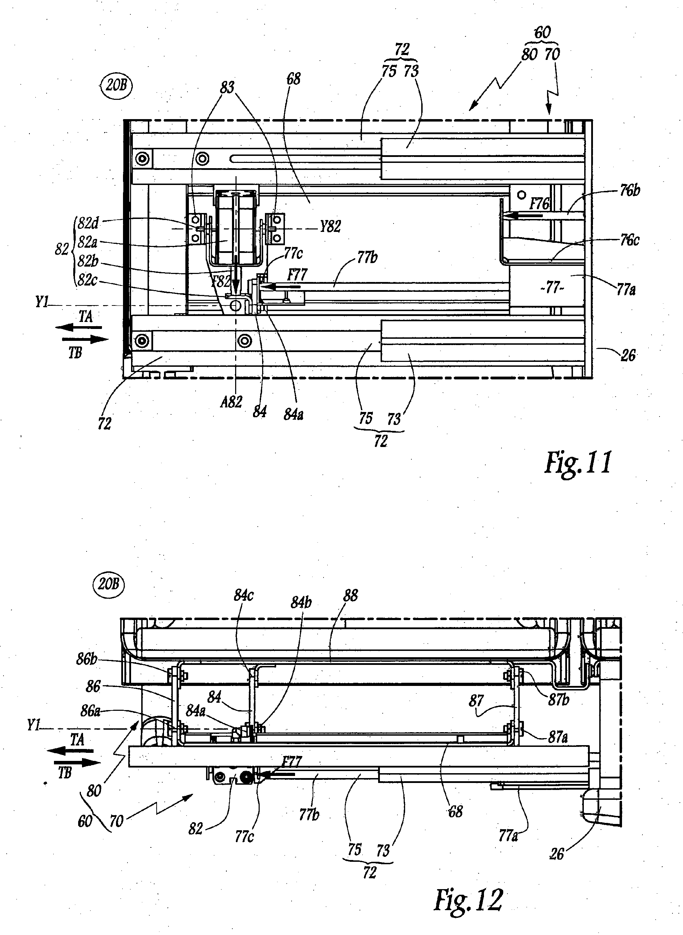

As shown in figures 11 to 14, the actuating device 60 comprises a sliding mechanism 70 and an adjustment mechanism 80.

The sliding mechanism 70 comprises two slides 72 parallel to each other and the axis Y1 and that are each provided with a rail 73 arranged between the two slides 74 and 75. Each slide 74 is fastened on the plate 26, in the intermediate space 37, and includes a groove with a T-shaped section that extends parallel to the axis Y1. Each slide 75 is attached to a support plate 68 also receiving the adjustment mechanism 80, and includes a groove with a T-shaped section that extends parallel to the axis Y1. Each rail 73 is in the shape of an H rotated 90°, so as to be able to be slidingly mounted parallel to the axis Y1 in the T-shaped grooves of the corresponding slides 74 and 75. The relative movements of the component elements 73, 74 and 75 of each slide 72 are limited by longitudinal stops inside said slides. The lower anchor 51 of the column 50 is attached to the slide 75 closest to the seat cushion 44.

The sliding mechanism 70 also comprises two horizontal jacks 76 and 77, which extend parallel to each other and the axis Y1. The first jack 76 is provided with a body fastened to the plate 26, said body not being visible in figures 1 to 14, as well as a rod 76b translationally mobile parallel to the axis Y1 relative to the jack body 76. The end of the rod 76b opposite the body of the jack 76 is secured to a support member 76c. The second jack 77 is provided with a body 77a attached to the member 76c, as well as a rod 77b translationally mobile parallel to the axis Y1 relative to the body 77a of the jack 77. The end of the rod 77b opposite the body 77a is secured to a support member 77c, which is fastened to the support plate 68.

In an alternative that is not shown, the mechanism 70 can comprise a single jack 76 or 77 and/or a single slide 72.

The mechanism 80 makes it possible to adjust the height of the mobile seat 40 relative to the fixed seat 30 in the unfolded position 20B, and more precisely to align the height of the mobile seat 40 relative to the fixed seat 30. To that end, this adjustment mechanism 80 comprises a jack 82 provided with a body 82a, as well as a rod 82b translationally mobile along an axis A82 relative to said body 82a. When the rod 82b extends outside the body 82a or goes back into the body 82a, the axis A82 moves in a plane perpendicular to the axis Y1. More precisely, the axis A82 is parallel to the axis X1 in the folded position 20A and inclined in a direction oblique to said axis X1 during movement of the seat 40 towards the unfolded position 20B. The end of the rod 82b opposite the body 82a is secured to a support member 82c. The body 82a comprises a hinge 82d connected to support members 83 secured to the plate 68, such that the body 82a of the jack 82 is rotationally mobile around an axis Y82 defined by the hinge 82d and parallel to the axis Y1.

The adjustment mechanism 80 also comprises levers 84, 86 and 87. The lever 84 includes a hinge 84a connected to the support member 82c, a hinge 84b connected to the support plate 68, and a hinge 84c connected to a support plate 88. This support plate 88 is attached under the seat cushion 42 of the mobile seat 40, and is parallel to the support plate 68. When the rod 82b exerts a force F82 on the member 82c, that force F82 is transmitted to the hinge 84a of the lever 84. As a result, the lever 84 pivots following a rotational movement centered on its hinge 84b, while the hinges 84a and 84c pivot relative to their respective supports 82c and 88.

Moreover, the mechanism 80 comprises two levers 86 situated on the jack 82 and cover plate 48 side, as well as two levers 87 situated on the side facing the walls 12 of the body shell 10. The two levers 86 are parallel to each other and have a similar configuration, with a hinge 86a connected to the lower support plate 68 and a hinge 86b connected to the upper support plate 88. Likewise, the two levers 87 are parallel to each other and have a similar configuration, with a hinge 87a connected to the support plate 68 and a hinge 87b connected to the support plate 88. The hinge pins 84b, 86a and 87a are fixed, parallel to the axis Y1 and situated in a same horizontal plane P80.

At this stage, the axis Y1 is considered to be combined with the hinge pin 84b. When the seat 40 is set upright by the mechanism 80, the plate 88 is mobile relative to the plate 68 following a circular translational movement RA perpendicular to the axis Y1. The levers 86 and 87 are followers, while the lever 84 is driving under the action of the jack 82. Thus, the seat cushion 42 is mobile relative to the plate 26 following the circular translational movement

RA.

The operation of the system 20 is described below, in particular its configuration changes, on one hand, from the folded position 20A towards the unfolded position 20B and, on the other hand, from the unfolded position 20B towards the folded position 20A.

Initially, the mobile seat 40 is retracted behind the fixed seat 30. More precisely, the seat 40 is arranged in an L-shaped space formed by the rear space 35 and the lower space 37 of the seat 30. In this case, the space 35 forms the practically vertical arm of the L, while the space 37 forms the horizontal arm of the L. The seat cushion 42 is housed in the space 37 formed between the plate 26, the seat cushion 32 and behind the cover plate 36, while the seatback 44 is housed in the space 35 formed behind the seatback 34.

When the operator wishes to modify the configuration of the system 20 to move the seat 40 in the unfolded position 20A, he actuates the sliding seat system 20 via a control member. This control member can be the column 50, or preferably a button, not shown, positioned on the instrument panel of the vehicle 1. The mechanism 60 of the system 20 then moves the mobile seat 40, from the folded position 20A towards the unfolded position 20B, under the action of the jacks 76 and 77.

First, the sliding mechanism 70 translates the seat 40 relative to the seat 30, following the movement TA of axis Y1.

In practice, the jacks 76 and 77 can be actuated simultaneously or sequentially to go from the folded position 20A to the unfolded position 20B. The rod 76b of the jack 76 exerts a force F76 on the member 76c, which moves said member 76c and the body 77a parallel to the axis Y1. The rod 77b of the jack 76 exerts a force F77 on the member 77c, thereby moving the support plate 68 secured to said member 77c. At the same time, the rails 73 and the slides 75 translate parallel to the axis Y1 while moving away from the plate 26 and the slides 74. When the rails 73 abut longitudinally relative to the slides 74, only the slides 75 translate until they in turn abut longitudinally relative to the rails 73.

At this stage, the support plate 68 is outside the space 37, but is still housed in the space 47. The translational movement TA is finished, and the seat 40 has moved laterally relative to the seat 30, on the platform 14 side. The seat cushion 42 is lower than the seat cushion 32 and the height thereof must be adjusted, said height being able to be defined as the distance measured vertically between the floor 11 and the seat cushions 32 and 42, along a direction perpendicular to the floor 11, the plane P80 and the plates 68 and 78.

Secondly, the adjustment mechanism 80 sets the seat 40 upright relative to the seat 30 following the circular translational movement RA.

In practice, the action of the jack 82 makes the lever 84 pivot and, at the same time, makes the levers 86 and 87 pivot in the vertical position. During this movement RA, the plate 88 remains parallel to the plate 68 and is positioned above said plate 68. When the mechanism 80 transmits the movement RA to the seat cushion 42, the height of the seat 40 is adjusted relative to the height of the seat 30. In other words, the height-adjusted seat 40 has a seat cushion 42 that is horizontally aligned with the seat cushion 32.

Thus, the seat 40 goes from the folded position 20A to the unfolded position 20B. The system 20 is then locked in said unfolded position 20B.

At this stage, the jack 82 can maintain the force F82 on the lever 84, such that the seat 40 remains in the unfolded position 20B without sinking under the weight of the passenger, while being height-adjusted relative to the seat 30. In other words, the jack 82 and the lever 84 constitute means for locking the mobile seat 40 in the unfolded position 20B.

In an alternative that is not shown, the locking means can include one or several complementary mechanical members, capable of keeping the height of the seat 40 adjusted in the unfolded position 20B.

When the operator wishes to fold the seat 40, he again actuates the control member, or a different control member, provided to that end. The rod 82b goes into the body 82a, such that the jack 82 exerts a force opposite the force 82 on the lever 84. Thus, the levers 84, 86 and 87 pivot in the direction of the descent of the plate 88 and the seat 40, following a circular translational movement RB opposite the movement RA.

When the seat 40 is lowered, the rods 76b and 77b go into the bodies of the respective jacks 76 and 77 while driving the support plate 68. This plate 68 is then retracted with the entirety of the actuating device 60, the slide mechanism 70 and the adjustment member 80 in the space 37 of the seat 30, following a horizontal translational movement TB opposite the movement TA.

Thus, the seat 40 goes from the unfolded position 20B to the folded position 20A. The system 20 is then locked in this folded position 20A.

In practice, the seat 40 is therefore mobile relative to the seat 30 following, on one hand, the translational movement TA or TB in a direction with axis Y1 perpendicular to the axis X1 and, on the other hand, the circular translational movement RA or RB perpendicular to the axis Y1. In operation, the system 20 is animated by sequential sliding and straightening or lowering movements of the seat 40 relative to the seat 30. These movements are automated by mechanisms 70 and 80 and in particular jacks 76, 77 and 82, which are preferably pneumatic or hydraulic. Preferably, the operator of the system 20 can lock the mobile seat 40 in the folded position 20A or in the unfolded position 20B to prevent it from being actuated by a passenger.

Moreover, the base 22 does not protrude laterally beyond the fixed seat 30, whether the seat 40 is in the folded position 20A or the unfolded position 20B. Thus, the cleaning of the floor 11 under the system 20 is made easier.

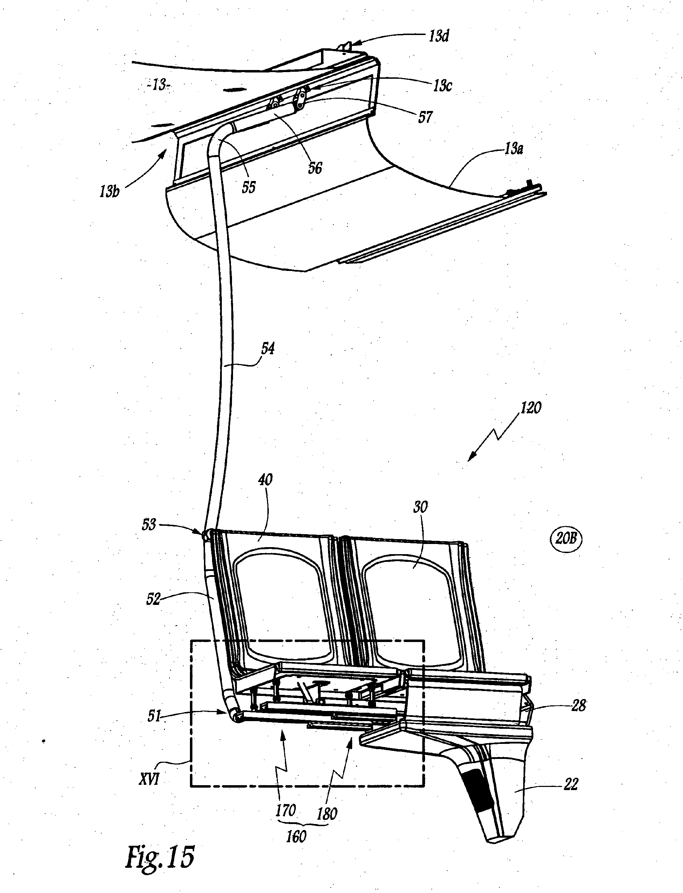

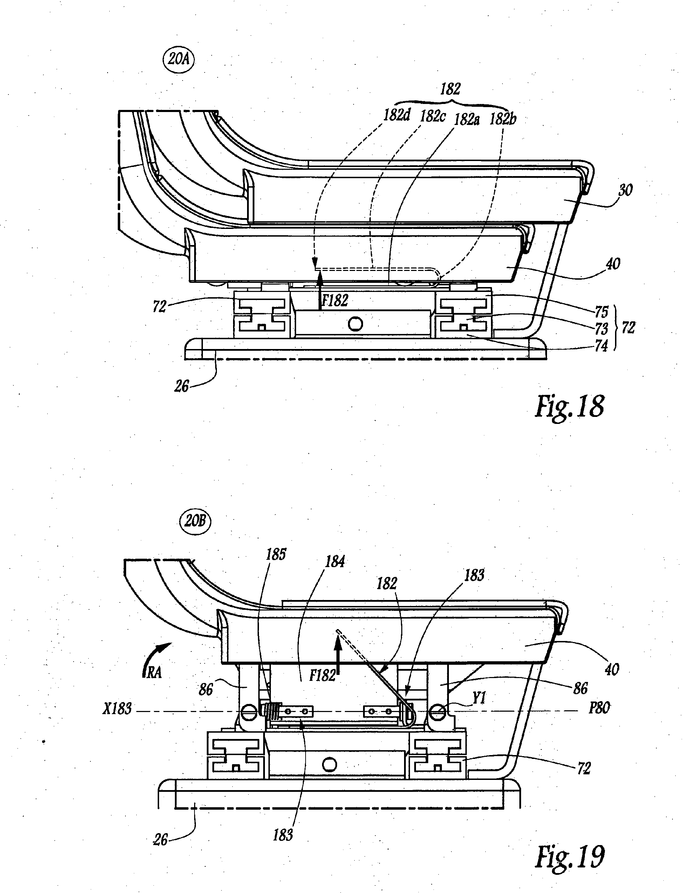

Figures 15 to 21 show a second embodiment of a sliding seat system 120 according to the invention.

This system 120 is adapted to equip the vehicle 1 shown in figures 1 to 3.

Certain component elements of the system 120 are identical to the component elements of the system 20 of the first embodiment, described above, and bear the same numerical reference. These are the base 22 provided with the foot 24, the accessory 25 of the loudspeaker type, the plate 26, the member 28, the fixed seat 30, the mobile seat 40 and the column 50. The component parts of the elements 30, 40 and 50 are identical.

However, the system 120 is equipped with an actuating device 160, comprising mechanisms 170 and 180 that have certain differences relative to those of the first embodiment. The sliding mechanism 170 includes slides 72 mounted between the fixed plate 26 and a mobile support plate 168, but not the jack. The adjustment mechanism 180 is arranged between the support plate 168 secured to the slides 75 and a plate 188 attached under the seat cushion 42, and includes levers 86 and 87 provided with hinges 86a, 86b, 87a and 87b, but not jacks. As a result, the operation of the actuating device 160 is manual and not automated.

At this stage, the axis Y1 is considered to be combined with the hinge pins 8b and 87b situated towards the front of the seat 40, opposite the seatback 44. The orientation of the axis Y1 is therefore identical to that of the first embodiment, like the position of the plane P80.

The adjustment mechanism 180 also comprises a U-shaped compression plate spring 182 and an L-shaped plate 184. The spring 182 includes a fixed arm 182c secured to the plate 168, a portion 182b curved at 180°, and an active arm 182c bearing against the plate 188 at an end 182d. The active arm 182c continuously exerts an upward stress F182, which tends to push the plate 184, the plate 188 and the mobile seat 40 opposite the floor 11.

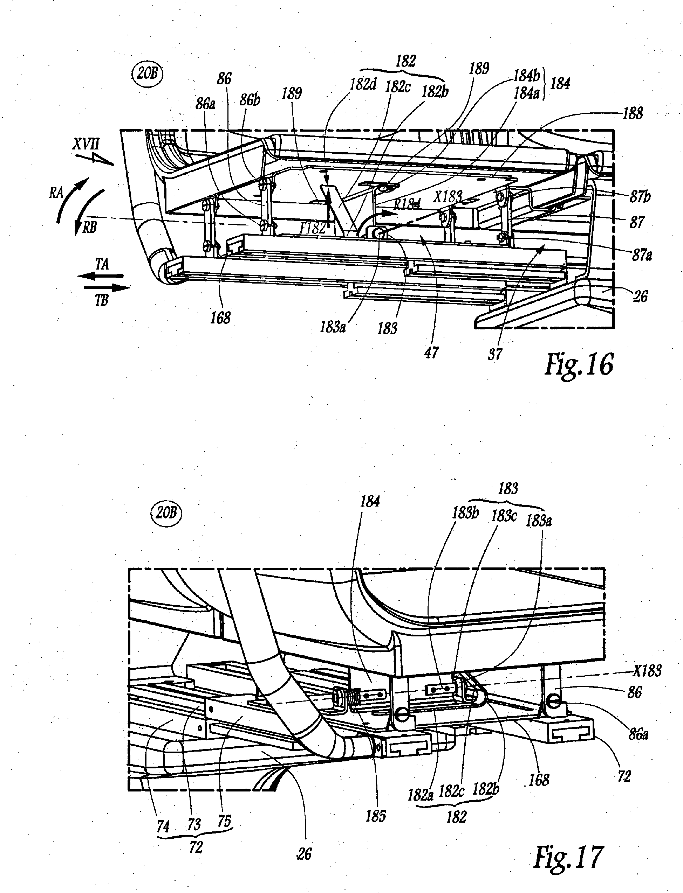

The plate 184 includes a main planar portion 184a, as well as a secondary planar portion 184b forming a 90° angle with the portion 184a. On the side of the portion 184a opposite the portion 184b, the plate 184 cooperates with two pivot members 183 defining an axis X183 perpendicular to the axis Y1. Thus, the plate 184 is mobile following a direction of rotation R184 around the axis X183 when the spring 183 pushes it. Moreover, the plate 188 includes locking elements 189 provided to receive the portion 184b of the plate 184 when the spring 182 has pushed the plate 184 in the vertical position, as shown in particular in figures 16, 19 and 21.

Each pivot member 183 includes an axis 183a provided with a grooved end 183b and passing through an element 183c attached to the plate 168. The axis 183a is rotationally mobile along the axis X183 relative to the element 183, while its end 183b is secured to the portion 184a of the plate 184. More precisely, this portion 184a is housed inside the two grooved ends 183b that are opposite each other. Moreover, the member 183 closest to the seatback 44 receives a return spring 185, which cooperates with the plate 168 and the plate 184, on the side opposite the compression spring 182.

The operation of the sliding seat system 120 has certain differences from the operation of the system 20.

Initially, the mobile seat 40 is retracted behind the fixed seat 30 of the system 120. When the operator wants to modify the configuration of the system 20 to move the seat 40 in the folded position 20A, he manually actuates the system 120 via a control member, which can be the column 50 or a handle (not shown) positioned on the seat 40, for example on the seatback 44 or on the side cover plate 48. The mechanism 160 of the system 120 then moves the mobile seat 40 from the folded position 20A towards the unfolded position 20B.

First, the seat 40 is manually translated relative to the seat 30, following a movement TA with axis Y1, using the sliding mechanism 170 including the slides 72. Indeed, a manual stress oriented along the axis X1 must be exerted by the operator on the seat 40 of the system 120 to laterally offset said seat 40 relative to the seat 30. At that stage, the support plate 168 is outside the space 37, but is still housed in the space 47. When the translational movement TA is finished, the seat 40 is moved laterally relative to the seat 30 and the height of the seat cushion 42 must be adjusted relative to the seat cushion 32.

Secondly, the adjustment mechanism 180 sets the seat 40 upright relative to the seat 30 following a circular translational movement RA. Advantageously, the straightening of the seat 40 is done automatically when the seat 40 is laterally offset relative to the seat 30, and therefore the seat cushion 42 is no longer locked under the seat cushion 32. At that time, the stress F182 exerted by the active arm 182c of the spring 182 on the plate 184 pushes the plate 188 and the seat 40 upwards, while the levers 86 and 87 pivot in the vertical position. When the mechanism 180 transmits the movement RA to the seat cushion 42, the height of the seat 40 is adjusted relative to the height of the seat 30. In other words, the height-adjusted seat 40 has a seat cushion 42 that is horizontally aligned with the seat cushion 32. Thus, the seat 40 of the system 120 goes from the folded position 20A to the unfolded position 20B.

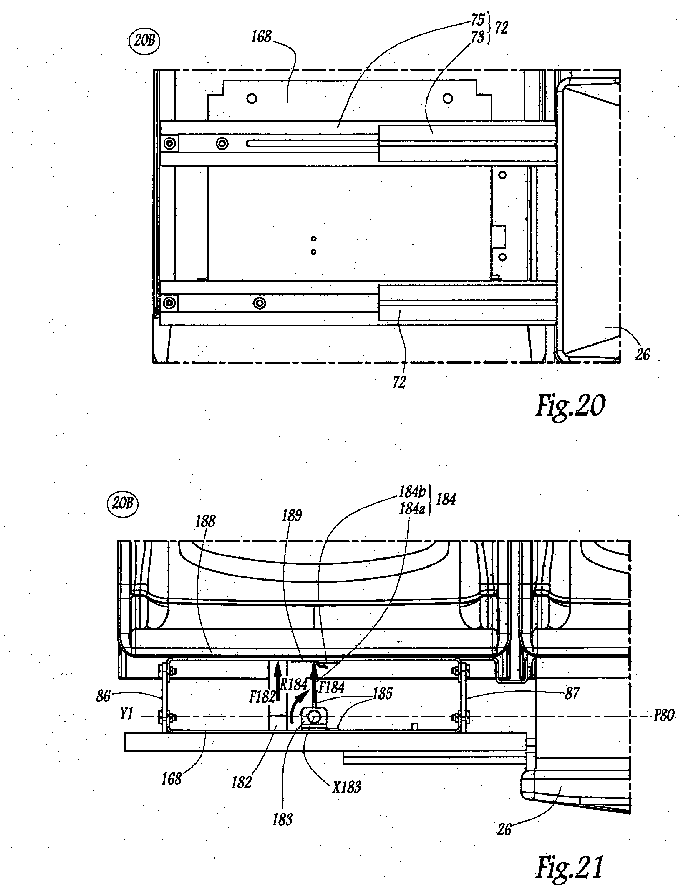

At that stage, the force F182 exerted by the spring 182 on the plate 184 tends to make said plate 184 pivot following the movement R184, until the portion 184a is in the vertical position. In that case, the portion 184b is housed in the locking elements 189. The end 182d of the spring 182 bears against the plate 188, but the force F182 is not sufficient to keep the seat 40 in the unfolded position 20B without sinking under the weight of the passenger, while being height-adjusted relative to the seat 30. As shown in figure 21, the plate 184 arranged vertically then exerts a stress F184 that prevents the seat 40 from going back down. In other words, the spring 182, the plate 184 and the locking members 189 constitute means for locking the mobile seat 40 in the unfolded position 20B.

When the operator wishes to fold the seat 40, it is necessary to unlock the plate 184. Preferably, the operator has a key provided for unlocking and folding said plate 184. Thus, the plate 184 pivots following a rotational movement opposite the rotation R184 around the axis X183, while being helped by the return spring 185. The spring 182 is compressed by the plate 184, while the levers 86 and 87 pivot in the direction of the descent of the plate 188 and the seat 40, following a circular translational movement RB opposite the movement RA.

When the seat 40 is lowered, a manual action by the operator makes it possible to push this seat 40 back behind the seat 30. The plate 168 then slides on the channels 72 and is retracted with the entirety of the actuating device 60, the sliding mechanism 70 and the adjustment mechanism 80 in the space 37 of the seat 30, following a horizontal translational movement T1B opposite the movement T710A. Thus, the seat 40 of the system 120 goes from the unfolded position 20B to the folded position 20A.

In practice, the seat 40 of the system 120 is therefore mobile relative to the seat 30 following, on one hand, the translational movement TA or TB following a direction with axis Y1 perpendicular to the axis X1 and, on the other hand, the circular translational movement RA or RB perpendicular to the axis Y1. In operation, the system 120 is animated by sequential sliding and straightening or lowering movements of the seat 40 relative to the seat 30. These movements result from a manual action, except the height adjustment of the seat 40. Preferably, these manual actions can be carried out by manipulating the column 50. Also preferably, the operator of the system 120 can lock the mobile seat 40 in the folded position 20A or in the unfolded position 20B to prevent it from being actuated by a passenger.

Moreover, some or all of the technical features of the different embodiments can be combined with each other. For example, the actuating device can combine automatic and manual mechanisms. Since an automatic system is simpler to use, while a manual system is less expensive, the sliding seat system can thus be adapted in terms of functionality and cost.

## Claims

1. A sliding seat system (20; 120) for a passenger transport vehicle (1), comprising:
- a base (22) fastened to a body shell (10) of the vehicle (1),
- a fixed seat (30) arranged on the base (22) and provided to receive a first passenger,
- a mobile seat (40) movable between, on one hand, a folded position (20A) in which the mobile seat (40) is retracted relative to the fixed seat (30) and, on the other hand, an unfolded position (20B) in which this mobile seat (40) is arranged next to the fixed seat (30) so as to receive a second passenger, and
- an actuating device (60; 160) configured to move the mobile seat (40) between the folded position (20A) and the unfolded position (20B), said actuating device (60; 160) comprising means (80; 180) for aligning the height of the mobile seat (40) in the unfolded position (20B) relative to the fixed seat (30), **characterized in that**
- said actuating device (60; 160) comprises a support plate (68; 168) that is laterally mobile relative to the base (22) and the fixed seat (30) along a first axis (Y1), said alignment means (80; 180) being arranged between the support plate (68; 168) and the mobile seat (40) and comprising at least one hinged lever (86, 87), each hinged lever (86, 87) comprising a first hinge (86a, 87a) connected to the support plate (68; 168) and a second hinge (86b, 87b) connected to the mobile seat (40), these hinges (86a, 86b, 87a, 87b) each forming a pivot connection with an axis parallel to the first axis (Y1); and wherein
- said means (180) for aligning the height of the mobile seat (40) comprise a compression plate spring (182) provided with a passive arm (182a) fastened to the support plate (168) and an active arm (182c) exerting a stress (F182) on the mobile seat (40), this stress (F182) being able, when the mobile seat (40) is laterally offset relative to the fixed seat (30), to make the levers (86, 87) pivot and move the mobile seat (40) following a circular translational movement (RA, RB) perpendicular to the first axis (Y1), and wherein
- said system also comprises a substantially vertical column (50) including a lower end (51) secured to the mobile seat (40) and an upper portion (55, 56, 57) capable of being connected to the body shell (10) of the vehicle (1), the system (20) preferably being configured so that a stress exerted on the column (50) selectively moves the mobile seat (40) from the folded position (20A) towards the unfolded position (20B) and/or from the unfolded position (20B) towards the folded position (20A), in particular when this stress is above a threshold value.

2. The system according to claim 1, **characterized in that** the actuating device (60; 160) is configured to move the mobile seat (40) following a lateral translational movement (TA, TB) along a first axis (Y1) and following a circular translational movement (RA, RB) perpendicular to said first axis (Y1).

3. The system according to one of the preceding claims, **characterized in that** the mobile seat (40) is a single piece and its height can be adjusted relative to the fixed seat (30) in the unfolded position (20B), without undergoing any deformation.

4. The system according to one of the preceding claims, **characterized in that** the actuating device (60; 160) comprises sliding means (70; 170) for making the mobile seat (40) slide relative to the fixed seat (30), said sliding means (70; 170) comprising at least one slide mechanism (72) arranged between the mobile seat (40) and the fixed seat (30), and **in that** the mobile seat (40) is able to slide between the folded position (20A) and the unfolded position (20B) without undergoing any deformation, while the base (22) does not protrude laterally beyond the fixed seat (30).

5. The system according to one of the preceding claims, **characterized in that** the actuating device (60; 160) also comprises locking means (82, 84; 182, 184, 189) for locking the mobile seat (40) in the unfolded position (20B), said locking means (82, 84; 182, 184, 189) being able to exert a stress (F82; F182, F184) opposite the lowering of the mobile seat (40) relative to the fixed seat (30) on the mobile seat (40).

6. A passenger transport vehicle (1), equipped with at least one sliding seat system (20) according to any one of the preceding claims.

## Patentansprüche

1. Gleit-Sitz-System (20, 120) für ein Fahrgast-Transport-Fahrzeug (1), umfassend:
- eine an einem Aufbau-Gehäuse (10) des Fahrzeugs (1) befestigte Basis (22),
- einen stationären Sitz (30), angeordnet auf der Basis (22) und dafür vorgesehen, einen ersten Fahrgast aufzunehmen;
- einen veränderbaren Sitz (40), beweglich zwischen einerseits einer gefalteten Position (20A), in der der veränderbare Sitz (40) bezüglich des stationären Sitzes (30) eingefahren ist und andererseits einer entfalteten Position (20B), in der dieser veränderbare Sitz (40) neben den stationären Sitz (30) angeordnet ist, um so einen zweiten Fahrgast aufzunehmen; und
- eine Betätigungs-Vorrichtung (60, 160), die so ausgestaltet ist, daß sie den veränderbaren Sitz (40) zwischen der gefalteten Position (20A) und der entfalteten Position (20B) bewegt, wobei die Betätigungs-Vorrichtung (60, 160) Einrichtungen (80, 180) zum Ausrichten der Höhe des veränderbaren Sitzes (40) in der entfalteten Position (20B) relativ zu dem stationären Sitz (30) umfaßt;
**dadurch gekennzeichnet, daß**
- die Betätigungs-Vorrichtung (60, 160) eine Stütz-Platte (68, 168) umfaßt, die relativ zu der Basis (22) und dem stationären Sitz (30) entlang einer ersten Achse (Y1) seitlich beweglich ist, wobei die Ausricht-Einrichtungen (80, 180) zwischen der Stützplatte (68, 168) und dem veränderbaren Sitz (40) angeordnet sind und wenigstens einen schwenkbaren Hebel (86, 87) umfassen, wobei jeder schwenkbare Hebel (86, 87) eine erste Drehachse (86a, 87a), die mit der Stützplatte (68, 168) verbunden ist, und eine zweite Drehachse (86b, 87b) umfaßt, die mit dem veränderbaren Sitz (40) verbunden ist, wobei diese Drehachsen (86a, 86b, 87a, 87b) jeweils eine Drehachsen-Verbindung mit einer Achse bilden, die parallel zu der ersten Achse (Y1) ist; und worin
- die Einrichtungen (180) zum Ausrichten der Höhe des veränderbaren Sitzes (40) eine Druck-Teller-Feder (182) umfassen, versehen mit einem an der Stützplatte (168) befestigten passiven Arm (182a) und einem eine Spannung (F182) auf den veränderbaren Sitz (40) ausübenden aktiven Arm (182c), wobei diese Spannung (F182) befähigt ist, dafür zu sorgen, daß dann, wenn der veränderbare Sitz (40) seitlich versetzt bezogen auf den stationären Sitz (30) ist, die Hebel (86, 87) schwenken und den veränderbaren Sitz (40) im Anschluß an eine kreisförmige Translationsbewegung (RA, RB) senkrecht zu der ersten Achse (Y1) bewegen; und wobei
- das System auch eine im Wesentlichen vertikale Säule (50) umfaßt, die ein unteres Ende (51), das an dem veränderbaren Sitz (40) befestigt ist, und einen oberen Teil (55, 56, 57) einschließt, der befähigt ist, mit dem Aufbau-Gehäuse (10) des Fahrzeugs (1) verbunden zu werden, wobei das System vorzugsweise so ausgestaltet ist, daß eine Spannung, die auf die Säule (50) ausgeübt wird, den veränderbaren Sitz (40) von der gefalteten Position (20A) in Richtung auf die entfaltete Position (20B) und/oder von der entfalteten Position (20B) in Richtung auf die gefaltete Position (20A) bewegt, insbesondere wenn diese Spannung oberhalb eines Schwellen-Werts liegt.

2. System nach Anspruch 1, **dadurch gekennzeichnet, daß** die Betätigungs-Vorrichtung (60, 160) so ausgestaltet ist, daß sie den veränderbaren Sitz (40) einer seitlichen Translations-Bewegung (TA, TB) entlang einer ersten Achse (Y1) folgend und einer kreisförmigen Translations-Bewegung (RA, RB) senkrecht zu der ersten Achse (Y1) folgend bewegt.

3. System nach einem der vorhergehenden Ansprüche, **dadurch gekennzeichnet, daß** der veränderbare Sitz (40) ein einziges Stück ist und seine Höhe relativ zu dem stationären Sitz (30) in der entfalteten Position (20B) angepaßt werden kann, ohne eine Verformung einzugehen.

4. System nach einem der vorhergehenden Ansprüche, **dadurch gekennzeichnet, daß** die Betätigungs-Vorrichtung (60, 160) Gleit-Einrichtungen (70, 170) dafür umfaßt, den veränderbaren Sitz (40) dazu zu bringen, relativ zu dem stationären Sitz (30) zu gleiten, wobei die Gleit-Einrichtung (70, 170) wenigstens einen Gleit-Mechanismus (72) umfaßt, der zwischen dem veränderbaren Sitz (40) und dem stationären Sitz (30) angebracht ist, und dadurch, daß der veränderbare Sitz (40) befähigt ist, zwischen der gefalteten Position (20A) und der entfalteten Position (20B) zu gleiten, ohne eine Verformung einzugehen, wobei die Basis (22) nicht seitlich über den stationären Sitz (30) hinaus vorsteht.

5. System nach einem der vorhergehenden Ansprüche, **dadurch gekennzeichnet, daß** die Betätigungs-Vorrichtung (60, 160) auch Verriegelungs-Einrichtungen (82, 84, 182, 184, 189) zum Verriegeln des veränderbaren Sitzes (40) in der entfalteten Position (20B) umfaßt, wobei die Verriegelungs-Einrichtungen (82, 84, 182, 184, 189) befähigt sind, eine Spannung (F82, F182, F184) gegenüber dem Absenken des veränderbaren Sitzes (40) relativ zu dem stationären Sitz (30) auf den veränderbaren Sitz (40) auszuüben.

6. Fahrgast-Transport-Fahrzeug (1), ausgestattet mit wenigstens einem Gleit-Sitz-System (20) nach irgendeinem der vorhergehenden Ansprüche.

## Revendications

1. Système de siège coulissant (20 ; 120) pour un véhicule de transport de passagers (1), comprenant :
une base (22) fixée à une caisse de carrosserie (10) du véhicule (1),
un siège fixe (30) agencé sur la base (22) et prévu pour recevoir un premier passager,
un siège mobile (40) mobile entre, d'une part, une position pliée (20A) dans laquelle le siège mobile (40) est rétracté par rapport au siège fixe (30) et, d'autre part, une position dépliée (20B) dans laquelle ce siège mobile (40) est agencé à côté du siège fixe (30) afin de recevoir un second passager, et
un dispositif d'actionnement (60 ; 160) configuré pour déplacer le siège mobile (40) entre la position pliée (20A) et la position dépliée (20B), ledit dispositif d'actionnement (60 ; 160) comprenant des moyens (80 ; 180) pour aligner la hauteur du siège mobile (40) dans la position dépliée (20B) par rapport au siège fixe (30), **caractérisé en ce que** :
ledit dispositif d'actionnement (60 ; 160) comprend une plaque de support (68 ; 168) qui est latéralement mobile par rapport à la base (22) et le siège fixe (30) le long d'un premier axe (Y1), lesdits moyens d'alignement (80 ; 180) étant agencés entre la plaque de support (68 ; 168) et le siège mobile (40) et comprenant au moins un levier articulé (86, 87), chaque levier articulé (86, 87) comprenant une première charnière (86a, 87a) raccordée à la plaque de support (68 ; 168) et une seconde charnière (86b, 87b) raccordée au siège mobile (40), ces charnières (86a, 86b, 87a, 87b) formant chacune un raccordement de pivot avec un axe parallèle au premier axe (Y1) ; et dans lequel :
lesdits moyens (180) pour aligner la hauteur du siège mobile (40) comprennent un ressort de plaque de compression (182) prévu avec un bras passif (182a) fixé sur la plaque de support (168) et un bras actif (182c) exerçant une contrainte (F182) sur le siège mobile (40), cette contrainte (F182) pouvant, lorsque le siège mobile (40) est latéralement décalé par rapport au siège fixe (30), faire pivoter les leviers (86, 87) et déplacer le siège mobile (40) en suivant un mouvement de translation circulaire (RA, RB) perpendiculaire au premier axe (Y1), et dans lequel :
ledit système comprend également une colonne sensiblement verticale (50) comprenant une extrémité inférieure (51) fixée sur le siège mobile (40) et une partie supérieure (55, 56, 57) pouvant être raccordée à la caisse de carrosserie (10) du véhicule (1), le système (20) étant de préférence configuré de sorte qu'une contrainte exercée sur la colonne (50) déplace sélectivement le siège mobile (40) de la position pliée (20A) vers la position dépliée (20B) et/ou de la position dépliée (20B) vers la position pliée (20A), en particulier lorsque cette contrainte est supérieure à une valeur de seuil.

2. Système selon la revendication 1, **caractérisé en ce que** le dispositif d'actionnement (60 ; 160) est configuré pour déplacer le siège mobile (40) en suivant un mouvement de translation latérale (TA, TB) le long d'un premier axe (Y1) et en suivant un mouvement de translation circulaire (RA, RB) perpendiculaire audit premier axe (Y1).

3. Système selon l'une des revendications précédentes, **caractérisé en ce que** le siège mobile (40) est une pièce unique et sa hauteur peut être ajustée par rapport au siège fixe (30) dans la position dépliée (20B), sans subir de déformation.

4. Système selon l'une des revendications précédentes, **caractérisé en ce que** le dispositif d'actionnement (60 ; 160) comprend des moyens de coulissement (70 ; 170) pour faire coulisser le siège mobile (40) par rapport au siège (30), lesdits moyens de coulissement (70 ; 170) comprenant au moins un mécanisme formant glissière (72) agencé entre le siège mobile (40) et le siège fixe (30), et **en ce que** le siège mobile (40) peut coulisser entre la position pliée (20A) et la position dépliée (20B) sans subir de déformation, alors que la base (22) ne fait pas latéralement saillie au-delà du siège fixe (30).

5. Système selon l'une des revendications précédentes, **caractérisé en ce que** le système d'actionnement (60 ; 160) comprend également des moyens de verrouillage (82, 84 ; 182, 184, 189) pour verrouiller le siège mobile (40) dans la position dépliée (20B), lesdits moyens de verrouillage (82, 84 ; 182, 184, 189) pouvant exercer une contrainte (F82 ; F182, F184) opposée à l'abaissement du siège mobile (40) par rapport au siège fixe (30) sur le siège mobile (40).

6. Véhicule de transport de passagers (1) équipé avec au moins un système de siège coulissant (20) selon l'une quelconque des revendications précédentes.
